# EUROPEAN PATENT SPECIFICATION

(11) **EP 0 283 239 B1**
(45) Date of publication and mention of the grant of the patent: **23.06.1993**
(21) Application number: 88302236.0
(22) Date of filing: 15.03.1988
(51) Int. Cl.: H01G 9/02, H01G 9/24

(54) **Electrolytic capacitors including a solid electrolyte layer, and their production**
Elektrolytische Kondensatoren mit einer Festelektrolytschicht und ihre Herstellung
Condensateurs électrolytiques comprenant une couche d'électrolyte solide, et leur fabrication

(30) Priority: 20.03.1987 JP 67172/87; 27.03.1987 JP 73741/87; 30.03.1987 JP 77112/87; 01.04.1987 JP 79943/87
(43) Date of publication of application: 21.09.1988
(73) Proprietor: NITSUKO CORPORATION, Kawasaki-shi Kanagawa 213 (JP)
(72) Inventor: Harakawa, Yoshihiro, Kawasaki-shi Kanagawa (JP); Izawa, Koji, Kawasaki-shi Kanagawa (JP); Takeuchi, Hidemitsu, Kawasaki-shi Kanagawa (JP); Nakamura, Shinji, Kawasaki-shi Kanagawa (JP); Toita, Sadamu, Kawasaki-shi Kanagawa (JP)
(74) Representative: Diamond, Bryan Clive

(56) References cited:
- EP-A- 0 264 786
- DE-B- 1 157 707
- FR-A- 2 462 775
- CHEMICAL ABSTRACTS, vol. 107, no. 8, 24th August 1987, page 15, no. 59693j, Columbus, Ohio, US & JP-A-62 48 723 (SHOWA DENKO K.K.) 03-03-1987

## Description

This invention relates to a solid electrolytic capacitor using an organic semiconductor as an electrolyte. More particularly, the invention relates to a solid electrolytic capacitor in which a polymer of a heterocyclic compound such as pyrrole, furan or thiophene is used as a solid electrolyte, and to a method of manufacturing this capacitor.

Conventionally, solid electrolytic capacitors use as a solid electrolyte manganese dioxide (MnO₂) or an organic semiconductor such as 7,7,8,8-tetracyanoquinodimethane (TCNQ) salt.

A solid electrolytic capacitor in which manganese dioxide (MnO₂) is used as the solid electrolyte has a capacitor element obtained by forming a thin dielectric oxidation layer such as aluminum oxide (Al₂O₃) on the surface of a metal such as aluminum on which the dielectric oxidation layer is capable of being formed, forming a manganese dioxide layer on the thin dielectric oxidation layer, forming a graphite layer on the manganese dioxide layer, and forming a silver paste layer on the graphite layer, by using the metal as one electrode and using the silver paste layer as the other electrode.

A solid electrolytic capacitor in which an organic semiconductor such as 7,7,8,8-tetracyanoquinodimethane (TCNQ) salt is used as the solid electrolyte has a capacitor element obtained by forming a thin dielectric oxidation layer such as aluminum oxide (Al₂O₃) on the surface of a metal foil such as aluminum, overlapping an electrolyte paper and the metal foil, winding them into a coil, and impregnating the electrolyte paper with an organic semiconductor such as TCNQ salt.

However, the solid electrolytic capacitor using manganese dioxide as the solid electrolyte is disadvantageous in that the process for forming the manganese dioxide layer on the thin film oxide of a metal is extremely complicated and costly. Another problem is that when the manganese dioxide layer is formed by the thermal decomposition of manganese nitrate, the oxide thin film is damaged. Though this can be repaired by reformation, the restorability of the oxide film is poor owing to the manganese dioxide layer. Moreover, since the conductivity of this dioxide is low, the specific resistance of the solid electrolytic capacitor is large and the leakage current is high.

The solid electrolytic capacitor using an organic semiconductor such as TCNQ salt as the solid electrolyte is disadvantageous in that when the TCNQ salt is held in the heated and molten state, an insulating reaction takes place in a very short period of time (about 10 sec) and, when the salt cools and hardens, it is converted from a semiconductor to an insulator. Other problems are that the manufacturing process is difficult to manage and does not readily lend itself to mass production. In addition, the TCNQ salt is high in price and its use is costly. A further drawback is that the specific resistance is high, though not to the extent of the solid electrolytic capacitor using manganese dioxide (MnO₂) as the solid electrolyte.

Array-type electrolytic capacitors are also available, in which the one terminal of each individual capacitor are joined electrically to the corresponding terminal of each other capacitor. Conventional array-type capacitors of this type are obtained by constructing ceramic capacitors into an array structure. These array-type ceramic capacitors have a small rated capacitance of 1 pF to 1000 pF. For this reason, to obtain an array-type ceramic capacitor with a rated capacitance larger than this range, its size must be increased; this results in difficulties for their practical applications.

The present invention has been devised in view of the foregoing circumstances and its object is to provide a solid electrolytic capacitor, as well as a method of manufacturing the same, using a polymer layer of a heterocyclic compound as a solid electrolyte, whereby specific resistance and leakage current are reduced, manufacture is simplified and suited to mass production and disparities in characteristics are eliminated.

Another object of the invention is to provide such a capacitor, and method of manufacturing the same, and adopting a multi-layered structure for the capacitor element, thereby providing a miniaturizable capacitor suited to mass production and having excellent high-frequency characteristics and a high capacitance.

A further object of the invention is to provide a solid electrolytic capacitor of an array-type structure.

EP-A-0264786 published on 27/04/88 and having the priority date 23/10/86 and thus relevant under Art, 54(3) EPC, discloses a solid electrolytic capacitor comprising a metal plate, e.g. of aluminium, which is coated in order with a dielectric oxidation layer (e.g. aluminium oxide), a solid electrolyte layer composed of a polymer formed from pyrrole, a graphite layer and a silver layer having a first electrical terminal attached to the silver paste layer and a second terminal attached to the plate. Furan or thiophene may be used as alternatives to pyrrole.

The solid electrolytic capacitor in accordance with the present invention has at least one capacitor element comprising a metal plate or foil divided into a first and second portion by a band of an insulating material formed at the periphery of the metal plate or foil whereby said first portion is uncoated and said second portion is roughened and coated in order with:
a) a dielectric oxidation layer,
b) a solid electrolyte layer, and
c) a single or composite electrically conductive layer, having one or more first electrical terminal attached to said conductive layer and a second terminal attached to the plate or foil;
characterised in that said electrolyte layer is composed of a polymer formed from a heterocyclic monomer and a supporting electrolyte.

The capacitor can have a multi-layered structure provided by stacking a plurality of the aforementioned coated metal plates; and such capacitor may have a first terminal provided on the at least one of the uncoated metal surfaces and second terminals provided on the respective conductive layers.

We also provide a method of making a capacitor as aforesaid, wherein the second portion of the metal plate or foil is coated successively with the dielectric oxidation layer according to a), electrolyte layer according to b) and said electrically conductive layer according to c),
whereby an elongated metal plate or foil is used which has a plurality of peripheral projections formed along at least one edge thereof and an insulator band is formed across each peripheral projection at the periphery thereof and the distal portion of each peripheral projection is roughened before or after said insulator bands are formed, and the coatings are formed on the distal portion of each peripheral projection, each peripheral projection is then severed from the body of the plate and terminals and attached to the conductive layer of each peripheral projection and to the uncoated first portion thereof before or after each peripheral projection is severed.

In making an array-type element, a plurality of the metal plates are stacked in such a manner that the projections thereof are made to correspond to one another, the stacked plates are integrated by application of pressure thereto; a first terminal is provided on the stacked metal plates; and a second terminal is provided on or between the conductive layers formed on the tip of the projections.

The present invention will be further described in conjunction with the accompanying drawings, and wherein:
Fig. 1 is a view illustrating the shape of an aluminum plate serving as the substrate of a capacitor element of a solid electrolytic capacitor according to the present invention;
Fig. 2 is an enlarged view showing a portion of a projection on the plate of Fig. 1;
Fig. 3 is a view showing the cross-section on line III of the capacitor formed from the material of Figs. 1-2;
Fig. 4 is a view of a capacitor element of a solid electrolytic capacitor according to the present invention;
Fig. 5 is an enlarged view showing a portion of a projection of another metal plate;
Fig. 6 is a view of another capacitor element of a solid electrolytic capacitor according to the present invention;
Fig. 7 is a graph showing leakage current - voltage characteristics of a solid electrolytic capacitor according to Fig. 3 and of an aluminum electrolytic capacitor according to the prior art;
Fig. 8 is a plan view, partially cut away, illustrating an aluminum foil constituting another form of a capacitor element substrate;
Figs. 9 and 10 are views illustrating a process for manufacturing a multi-layered solid electrolytic capacitor according to the invention;
Fig. 11 is a side view of the main body of a multi-layered solid electrolytic capacitor element made as in Figs. 9 and 10;
Fig. 12 is a plan view, partially cut away, of an etched aluminum foil similar to that of Fig. 1, for use in the process of Figs. 13-14;
Figs. 13 and 14 are views illustrating a process for manufacturing a chip-type multi-layered solid electrolytic capacitor according to the invention;
Fig. 15 and 16 are a side view and top view, respectively, showing a wire terminal-type multi-layered solid electrolytic capacitor according to the invention;
Fig. 17 is a view showing capacitor element bodies placed on a molding frame;
Fig. 18 is a view showing the external appearance of a four-terminal multi-layered solid electrolytic capacitor according to the invention;
Fig. 19 is a graph showing the frequency characteristics of the impedance of a solid electrolytic capacitor according to the invention and a conventional aluminum elctrolytic capacitor;
Figs. 20 and 21 are views each illustrating a process for manufacturing another multi-layered solid electrolytic capacitor according to the invention;
Fig. 22 is a view showing the main body of the multi-layered solid electrolytic capacitor element made as in Figs. 20-21;
Figs. 23 and 24 are views each illustrating another process for manufacturing another multi-layered solid electrolytic capacitor according to the invention;
Fig. 25 is a perspective view showing the structure of a multi-layered array-type solid electrolytic capacitor according to the invention;
Fig. 26 is a plan view showing a metal plate serving as a substrate on which a dielectric oxidation layer is capable of being formed;
Fig. 27 is a front view illustrating six stacked array-type solid electrolytic capacitor element plates;
Fig. 28 is a side view of the arrangement shown in Fig. 27 ;
Fig. 29 is a view showing the structure of another array-type solid electrolytic capacitor element according to the invention;
Fig. 30 is a view showing the external appearance of a single-plate array-type solid electrolytic capacitor in which a molded cladding is formed on the capacitor element;
Fig. 31 is a view showing the structure of another array-type solid electrolytic capacitor element plate according to the invention; and
Fig. 32 is a view illustrating the structure of a multi-layered array-type solid electrolytic capacitor element obtained by stacking the array-type solid electrolytic capacitor element plates.

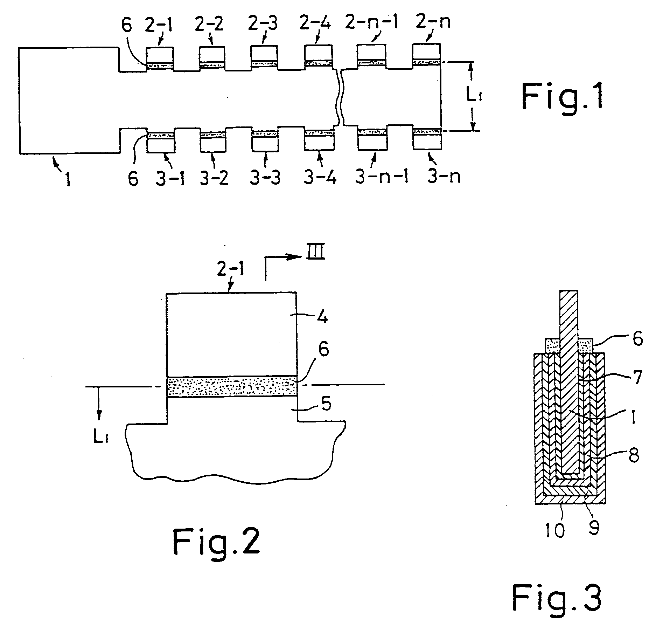

Referring to Fig. 1, numeral 1 denotes a metal plate such as aluminum, tantalum, titanium or niobium. The use of aluminum is described hereinafter; the surface of an aluminum foil was subjected to an etching treatment to roughen the surface, after which the foil was cut into shape shown in Fig. 1, i.e. so as to have a number of rectangular projections 2-1, 2-2, ... 2-n in a row along one longitudinal edge and a similar row of projections 3-1, 3-2, ... 3-n along the other longitudinal edge. Next, a band 6 comprising an insulative synthetic resin is formed at the periphery of each of the projections 2-1, 2-2, ... 2-n and 3-1, 3-2, ... 3-n at a predetermined position thereon.

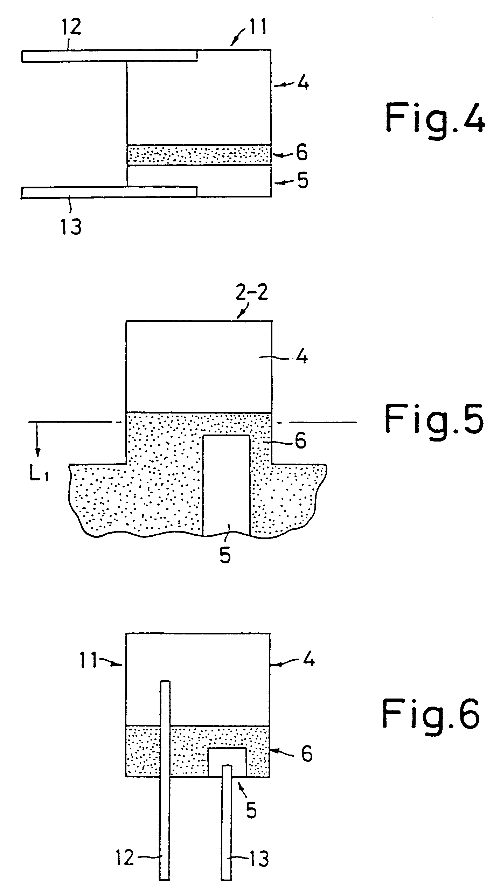

Fig. 2 is an enlarged view of a portion of the projection 2-1. As shown in Fig. 2, the insulating band having a predetermined shape (compare Fig. 5) and size is formed across the projection 2-1 at a desired position thereon, whereby the projection 2-1 is divided into two portions 4 and 5. The portion 4 constitutes an exposed surface of the metal plate 1. The top side and underside of the exposed surface are continuous. An insulator band 6 is similarly formed on the other projections 2-2, ... 2-n and 3-1, 3-2, ... 3-n.

Masking (not shown in the drawings) is then applied to the central portion L₁ of the aluminum foil and there are successively formed on the exposed portion 4 of each of said projections 2-1, 2-2, ... 2-n, 3-1, ... 3-n, a thin film aluminum oxide (Al₂O₃) layer 7, a layer 8 of a heterocyclic polymer compound, a graphite layer 9 and a silver paste layer 10 to give a structure as shown in Fig. 3.

The aluminum oxide layer 7 is formed in usual manner, e.g. by anodising.

The polymeric layer 8 is formed by dipping the foil in an electrolyte solution containing pyrrole and either borodisalicyclic acid or borodisalicyclic salt (e.g. an electrolyte solution containing pyrrole and ammonium borodisalicylate (ABS)) wherein acetonitrile is the solvent, adopting the vessel (usually made of stainless steel) containing the electrolyte solution as the cathode and the aluminum foil as the anode, and supplying a predetermined direct current thereto. Thereby electrochemical polymerization takes place in the electrolyte solution so that a polypyrrole layer is formed on the aluminum oxide layer 7. The thickness of the polypyrrole layer is 20 - 50 µm. Since the pyrrole polymer layer (polypyrrole layer) formed by electrochemical polymerisation on the dielectric oxidation layer such as the aluminum oxide layer 7 is a polypyrrole compound in which the N-H groups of the pyrrole molecules and the supporting electrolyte are hydrogen bonded, the electrolytic polymerization should be carried out in an electrolyte solution which includes, in addition to the pyrrole ABS as the supporting electrolyte. The latter should contain boric acid and any one of the following ingredients:
(1) an aliphatic or aromatic carboxylic acid or salt thereof;
(2) an aliphatic or aromatic compound, or salt thereof, having two or more carbonyl groups;
(3) an aliphatic or aromatic compound or salt thereof, having at least one hydroxyl (-OH) group and at least one carboxylic acid (-COOH) group; and
(4) an aliphatic or aromatic compound or salt thereof, having at least one amine (-NH₂) group and at least one carboxylic acid (-COOH) group.

It is also possible to use a boron compound obtained by chemically combining boron and one of the abovementioned compounds (1) to (4) as the supporting electrolyte.

The portion having the polypyrrole layer formed thereon is then dipped into a graphite aqueous solution, after which the deposited graphite is allowed to harden to form the graphite layer 9. The resulting structure is then dipped into a silver paste aqueous solution and the coating of paste is then allowed to harden to form the silver paste layer 10.

After the layers of aluminum oxide 7, polymer 8 , graphite 9 and the silver paste 10 are thus successively formed on each portion 4 defined by the insulator band 6 on the projections 2-1, 2-2, ... 2-n and 3-1, 3-2, ... 3-2, the masking is removed, and each of these projections 2-1, 2-2, ... 2-n and 3-1, 3-2, ... 3-n are cut off at their base ends from the central spine of the metal plate 1.

As shown in Fig. 4, each projection cut off from the plate 1 has the portion 4 on one side of the band of insulator band 6 and an uncoated portion 5 on the other side of the insulator band.

Fig. 5 is an enlarged view of an alternative shape of the insulator band 6 formed on one (2-2) of the projections 2-1, 2-2, ... 2-n and 3-1, 3-n on the longitudinal sides of the etched aluminum foil constituting the metal plate 1. Fig. 5 is an enlarged view of the projection 2-2.

As shown in Fig. 5, the insulator band is formed over most of the surface of the etched aluminum foil leaving exposed the predetermined portion 4 of the projection and the portion 5 to which one of the capacitor terminals is attached. Next, as described above, the successive coatings 7, 8, 9 and 10 are formed on the portion 4 defined by the insulator band 6. Thereafter, each of the projections are cut off from the etched aluminum foil.

With either shape of insulator band, as shown in Figs. 4 and 6, a wire terminal 12 is connected to the portion 4 and another wire terminal 13 is connected to the portion 5. This step can be done before or after the projections are severed from the plate. This completes the manufacture of the capacitor element 11.

If the capacitor element 11 of either embodiment of Fig. 4 or 6 is to be sheathed, a cladding (e.g. of resin) is applied to the capacitor element 11 with the exception of the portions of the terminals 12, 13 that protrude from the element 11 proper. This completes the solid electrolytic capacitor of the invention.

The terminals 12, 13 can have arrangements other than those illustrated.

The spacing between the terminals 12 and 13 and the directions in which these terminals project from the capacitor element can be freely adjusted by forming the insulator band 6 in various shapes and dimensions on the projections 2-1, 2-2, ... 2-n and 3-1, 3-2, ... 3-n at predetermined positions.

Thus, the manufacturing process comprises:
forming an insulator band of a desired shape on a predetermined portion of a projection on a metal plate;
successively forming a dielectric oxidation layer, layer of a polymer of a heterocyclic compound and a conductive layer on a surface of one portion of the projections defined by the resist layer;
severing the projections from a base portion; and
before or after the severing attaching a first wire terminal to an uncoated portion of the severed projection defined by the resist layer and a second wire terminal to the conductive layer.

In the resultant capacitor, the polymer layer 8 of the heterocyclic compound serves as an electrolyte; since the polymer layer 8 has a high conductivity, the capacitor has a specific resistance (ESR) which is lower than that of a conventional solid electrolytic capacitor in which the solid electrolyte is manganese dioxide or an organic semiconductor such as TCNQ salt. In addition, leakage current is much less than in a conventional solid electrolytic capacitor.

The above-described solid electrolytic capacitor is characterised by non-polarity, i.e. the capacitor will not exhibit polarity when supplied with a voltage within a fixed range. Thus, if a voltage within a fixed range is impressed upon the capacitor 11 described above, either the wire terminal 12 or 13 may serve as the anode, or either may serve as the cathode.

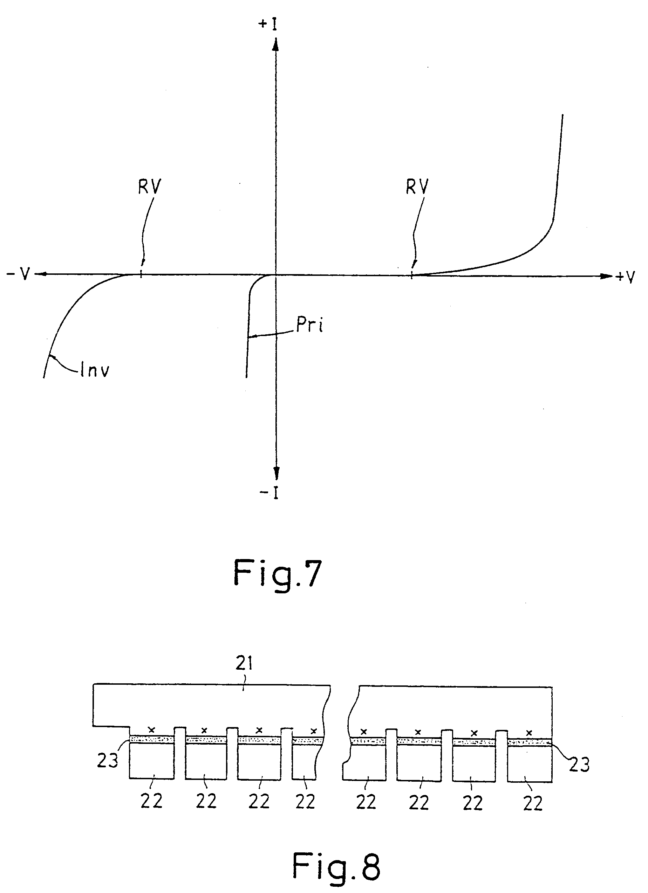

In Fig 7, the curve Inv shows the leakage current - voltage characteristics of a solid electrolytic capacitor according to Fig. 1; curve Pri that of a known aluminum electrolytic capacitor. For each curve, RV indicates the rated voltage. Leakage current I is plotted along the vertical axis and voltage V is plotted along the horizontal axis. It is seen that with the conventional aluminum electrolytic capacitor, leakage current I increases sharply when a voltage of negative polarity is impressed upon the capacitor, and the capacitor is eventually destroyed. With the solid electrolytic capacitor of the present invention, however, the leakage current value is approximately the same as in the case of an applied positive voltage so long as the negative voltage applied to the capacitor has a value within the rated voltage range; it thus has been confirmed that the capacitor of the invention exhibits non-polarity in a predetermined voltage range.

By manufacturing the solid electrolytic capacitor of the invention in the manner set forth above, the successive layers 7 to 10 can be formed successively in the multiplicity of projections of the plate. Thereby a large quantity of capacitor elements can readily be manufactured at one time.

Furthermore, since the graphite layer 9 and silver paste layer 10 can be formed by a dipping method or printing method, each of the layers can be formed quickly and uniformly. This makes it possible to reduce the disparities in quality among the completed capacitors.

In place of pyrrole as the heterocyclic compound; a compound such as furan or thiophene can be used, to give a corresponding polymer layer.

In addition, the shape of the projections 2-1, 2-2, ... 2-n and 3-1, 3-2, ... 3-n formed on the edges of the etched aluminum foil 1 is not limited to a rectangle, e.g. the projections can be polygonal or circular in shape.

Though the projections are formed on both longitudinal side edges of the etched aluminum film 1 in the foregoing embodiment of Fig. 1, they may be formed on one side edge only, as shown in Fig. 8, which is a plan view, partially cut away, illustrating the shape of another form of a metal plate used as a substrate to make a capacitor element.
The etched foil 21 has the form of a strip along one longitudinal side edge of which are formed a plurality of rectangular projections 22, 22,... spaced apart by a predetermined distance. An insulator band 23 of a predetermined shape and size is formed across each face of each projection 22 at a predetermined position thereon. Thus, each projection 22 is divided into two portions by the insulator band 23.

The etched aluminum foil 21 is masked on the portion thereof above the band 23 in Fig. 8, then the thin-film aluminum oxide layer is formed on the foil by any known method. Next, there are formed in turn as described above, a pyrrole polymer layer (by dipping the etched aluminum foil 21 in an electrolyte solution), the graphite and silver paste layers. The masking is then removed. The result is a completed capacitor element plate again having the cross-sectional structure as shown in Fig. 3.

We now describe the preparation of a multi-layered solid capacitor.

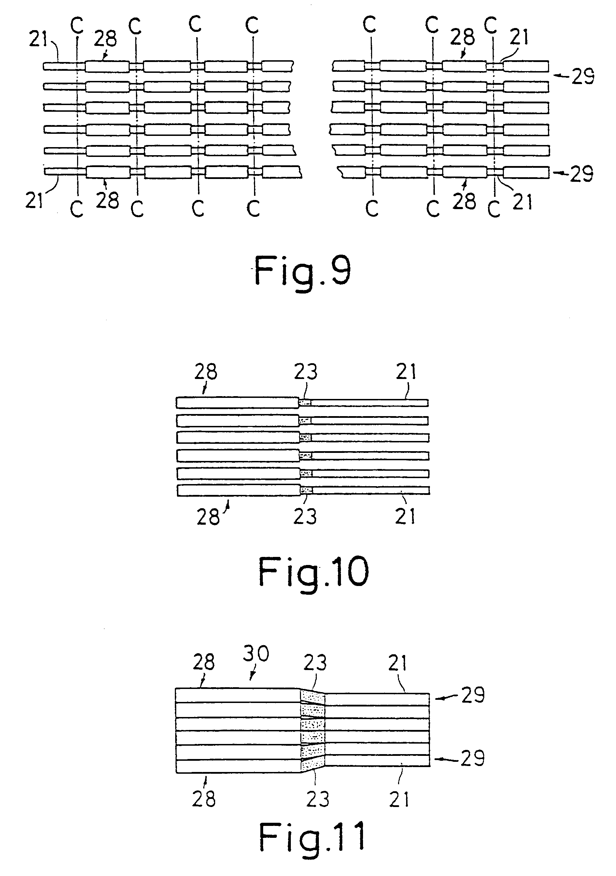

As shown in Fig. 9, a plurality (six in the illustration) of the capacitor plates 29 of Fig. 3 are closely stacked in such a manner that the projections 22 of the plates are made to correspond to one another. Fig. 9 is a front view showing the stacked six capacitor element plates 29 and Fig. 10 is a side view thereof.

The projections 22 are then subjected to pressure at high temperature and the silver paste layers 27 on the portions 28 defined by the respective insulator bands 23 are allowed to partially dry, thereby integrating the stacked capacitor element plates 29 by causing the portions 28 thereof to become affixed to one another. The other portions defined by the insulator bands 23, namely the uncoated portion where the etched aluminum 21 is exposed (these portions being indicated by the "X" marks in Fig. 8), are also joined to one another, e.g. by being welded together.

Next, the stacked capacitor element plates 29 are severed between the projections 22 (along the lines C-C shown in Fig. 9), thereby forming a plurality of capacitor element bodies 30 for a multi-layered solid electrolytic capacitor, each body having the configuration shown in Fig. 11.

In the above embodiment, the metal plate in Fig. 8 bears the projections 22 along one longitudinal side edge of the strip as in Fig. 9, but a foil having two rows of projections as in Fig. 1 can be used, and the projections can be of any desired shape.

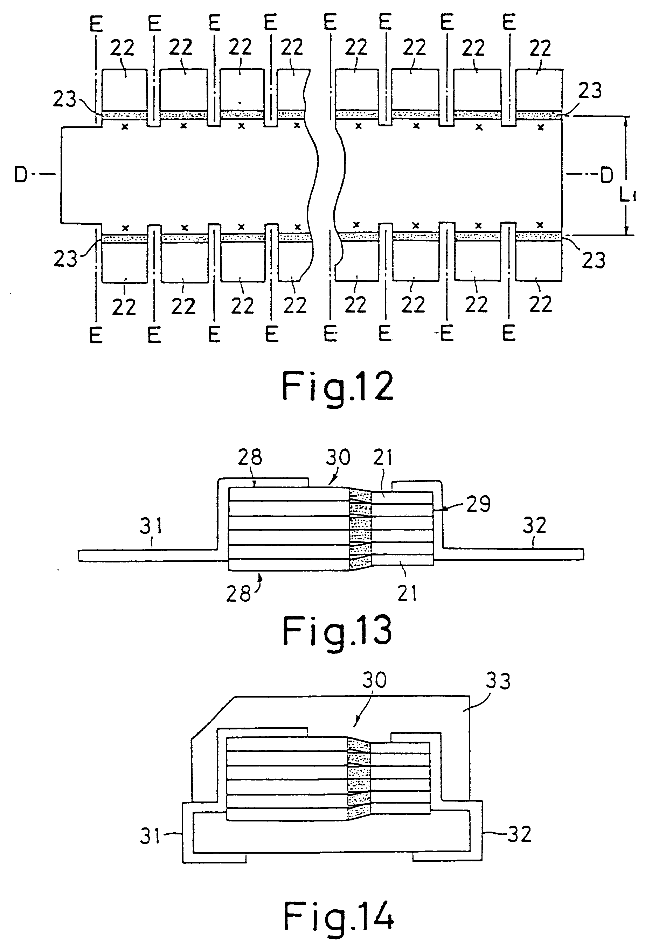

With such a double-edged body (Fig. 12), masking of portion L1, coating and bonding under pressure are effected in the same manner as for Figs. 9-11 followed by cutting the assemblies along the broken lines D-D, E-E shown in Fig. 12, whereby there are obtained capacitor element bodies 30 of a structure identical with that shown in Fig. 11.

Next, as shown in Fig. 13, a plate-shaped terminal 31 is brought into pressure contact with the outer surface of the partially dried silver paste layer on the portion 28 of the multi-layer capacitor element body 30 defined by the insulator band 23, and the silver paste layer is then fully dried and cured to attach the terminal 31 to the portion 28. A similar plate-shaped terminal 32 is attached, e.g. by spot welding, ultrasonic welding or cold welding to the etched aluminum foil 21 on the other (uncoated) portion defined by the resist layer 23. The finished product is the capacitor element.

As shown in Fig. 14, a resin-molded housing or cladding 33 is then formed over the capacitor element but leaving portions of the terminals 31, 32 exposed. Thereafter, the exposed portions of the terminals 31, 32 are bent onto the outer surface of the resin-molded cladding 33 and the distal end portions of these terminals are extended onto the bottom surface of the cladding 33. This completes the fabrication of a "chip-type" multi-layered solid electrolytic capacitor.

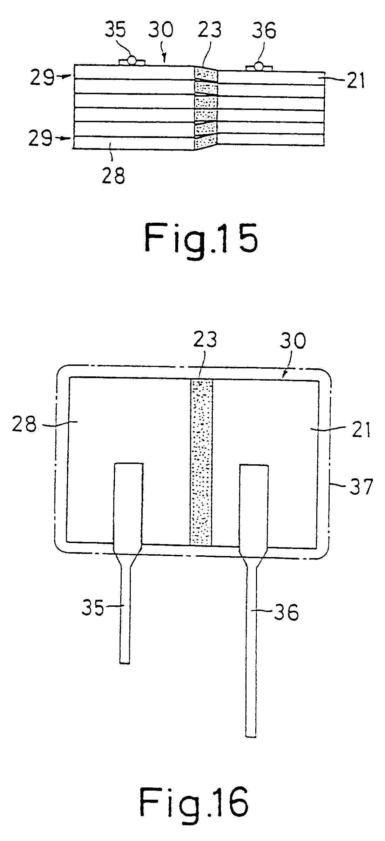

In the above embodiment, the capacitor element body 30 is of the chip type. However, as shown in Figs. 15 and 16, it is possible to make a wire terminal-type multi-layered solid electrolytic capacitor by respectively attaching outwardly extending wire terminals 35 and 36, through the method described above, to the portion 28 defined on the capacitor element body 30 by the insulator band 23 and the aluminum foil 21 of the other portion defined by the resist layer 23, whereby a capacitor element is obtained, and forming a resin cladding 37 on the capacitor element.

The capacitor element body 30 can be employed to produce a capacitor having a four-terminal structure. This will now be described.

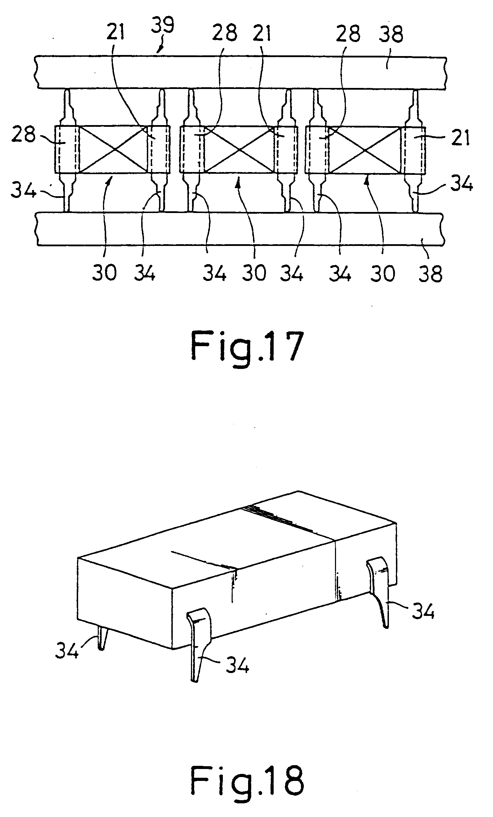

As shown in Fig. 17, a molding frame 39 wherein a frame 38 is formed integral with the terminal section 34 is prepared. Next, the capacitor element body 30 is arranged between the terminal sections 34, 34, the portion 28 of the capacitor element body 30 and one terminal section 34 are connected, as by being soldered together, and the other portion of the capacitor element body, namely the etched aluminum foil 21 and one other terminal section 34 are joined, e.g. by spot welding, ultrasonic welding or cold welding. The entirety of the capacitor element body 30 is then clad in a synthetic resin leaving the distal ends of the terminal section 34 exposed. Finally, the distal ends of the terminal section 34 are severed from the frames 38, 38 and these are then bent, whereby there is obtained a miniature multilayered solid electrolytic capacitor having a four-terminal structure, as shown in Fig. 18.

The above described sequence of steps can be modified to some extent. For example, directly after the silver paste layers on the portions 28 are partially dried to affix them and integrate them, the projections can then be cut off at their base ends, followed by joining, as by welding, the exposed aluminum foil portions 21.

Thus, the steps of the manufacturing process can have any order as long as the capacitor element is manufactured by at least the following steps:
forming the insulator band 23 on the projection 22;
successively forming the aluminum oxide layer, the pyrrole polymer layer, the graphite layer and the silver paste layer on one portion of the projection defined by the band 23;
stacking a plurality of the etched aluminum foils 21 in such a manner that the respective portions 28 and 29 defined on the foils by the insulator band 23 correspond with one another;
applying pressure to and integrating the silver paste layers of the laminate;
joining, at each and every projection 22, the other uncoated portions of the etched aluminum foils 21 defined by the resist layers 23 of each projection 22 of the laminate;
cutting the laminate between the projections 22, 22 to form individual element laminates; and
attaching a first terminal to a portion of the silver paste layers of the element laminate and a second terminal to a portion of the joined uncoated etched foils 21.

The multi-layered solid electrolytic capacitor made as stated above has 1.4 to 1.5 times larger CV product value than the sintered solid tantalum electrolytic capacitor of the same size which has the largest CV product value so far among the recent commercial capacitors. For example, a 10-22µF rating unit of the multi-layered solid electrolytic capacitor of the invention can be obtained in a case of 6x7x5mm of external dimensions while only a 10V-15µF rating unit of the solid tantalum electrolytic capacitor can be contained in the same case. Thus the size of capacitor can be miniaturized at least by 30% by this invention.

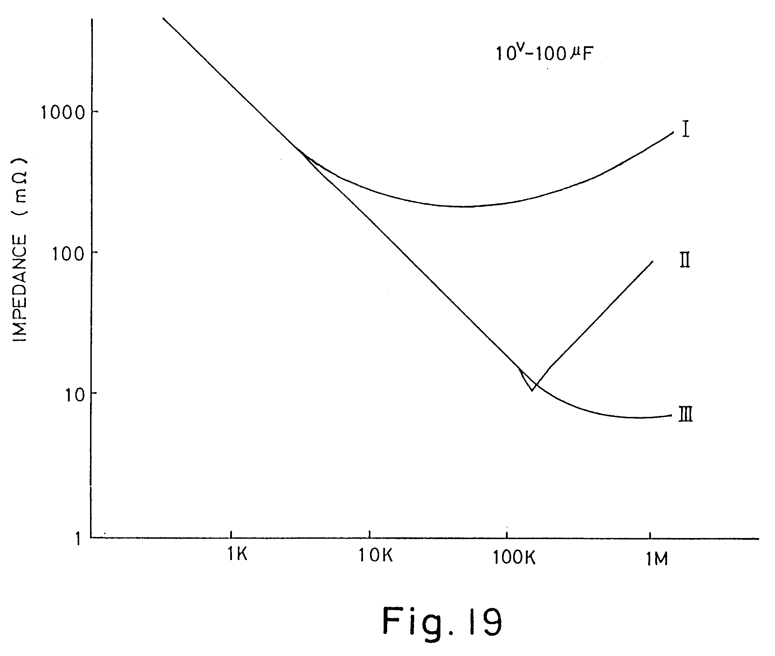

Fig. 19 is a graph of the frequency characteristics of the impedance of two solid electrolytic capacitors according to the foregoing embodiment and an aluminum electrolytic capacitor according to the prior art. Impedance values (mΩ) are plotted along the vertical axis, and frequency (Hz) is plotted along the horizontal axis. Each capacitor had a rated voltage of 10 V and a capacitance of 100 µf.

The impedance frequency characteristics shown in the wire are respectively of: (I) a conventional aluminum electrolytic capacitor, (II) a four-terminal multi-layered solid electrolytic capacitor (as shown in Fig. 18) obtained by using the capacitor element body 30 of the foregoing embodiment; and (III) a multi-layered solid electrolytic capacitor wherein the wire terminals are attached to the capacitor element body 30 (as shown in Figs. 15 and 16).

As shown by curves II and III, the multi-layered solid electrolytic capacitor of the foregoing embodiment has a very low impedance in a high frequency region of more than 10 KHz, compared to that of the prior art capacitor.

Moreover, by adopting the multi-layered structure for this solid electrolytic capacitor, miniaturization is possible; in particular, height can be reduced by adopting the four-terminal structure. Accordingly, the above-described multi-layered solid electrolytic capacitor is well suited as an output smoothing capacitor in an output smoothing circuit of a switching power supply and serves to reduce the size and thickness of the circuit.

Because the layer of the polymer of heterocyclic compound is used as the electrolyte, the solid electrolytic capacitor has an equivalent series resistance which is lower than that of a conventional solid electrolytic capacitor in which the solid electrolyte is manganese dioxide or an organic semiconductor such as TCNQ salt. In addition, leakage current is much less in comparison with the conventional solid electrolytic capacitor. Thus, the solid electrolytic capacitor of the present invention has outstanding characteristics.

The above-described solid electrolytic capacitor has voltage-current characteristics approximately the same as those shown in Fig. 7, i.e. it also has non-polar characteristics and does not exhibit polarity within a prescribed voltage range. Using the chip-type multi-layered solid electrolytic capacitor having the structure shown in Fig. 14 as an example, either the terminal 31 or 32 may serve as the anode; conversely, either may serve as the cathode. In either case, almost the same leakage current - voltage characteristics are obtained.

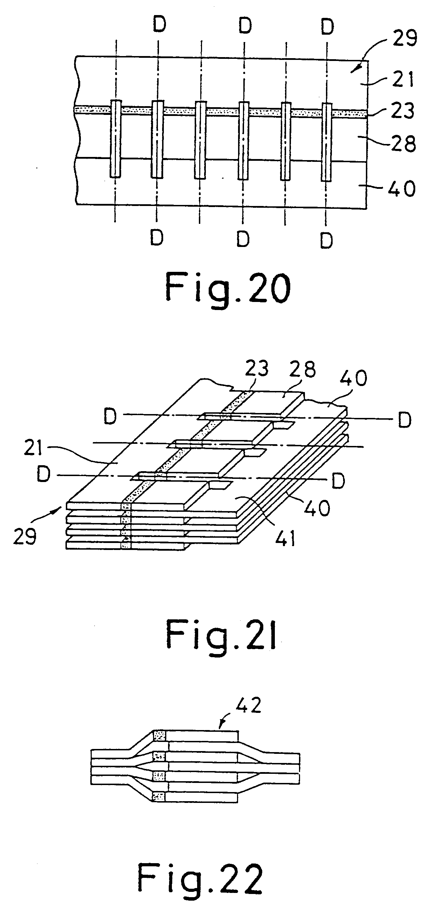

Figs. 20 and 21 illustrate, in plan and perspective, a process for manufacturing another multi-layered solid electrolytic capacitor according to the invention. The capacitor element plate 29 is the same as the plate 21 in Fig. 9. Numeral 40 denotes a thin copper plate, each of which has, on one longitudinal side edge thereof, projections 41 of a shape and dimensions corresponding to the portions 28 defined by the insulator bands 23 of the capacitor element plate 29. When the capacitor element plates 29 are stacked, the projections 41 of the thin copper plates 40 are stacked by being interposed between the portions 28, 28, i.e. between the silver paste layers on the portions 28 defined by insulator bands 23; then the silver paste layers and projections 41 of the thin copper plates 40 are integrated by the application of pressure under high temperature.

After the portions 28, 28 of the capacitor element plates 29 are thus stacked and integrated with the projections 41 of the thin copper interposed therebetween, the leading edges of the thin aluminum plates 21 serving as one electrode of the capacitor element plates 29 and the leading edges of the thin copper plates 40 are joined, (e.g. by spot welding, ultrasonic welding, seam welding, stitch welding or cold welding).

Next, the laminate is cut between the projections 22 (on lines D-D in Figs. 20 and 21 ), thereby completing the fabrication of a capacitor element body 42 of the kind shown in Fig. 22.

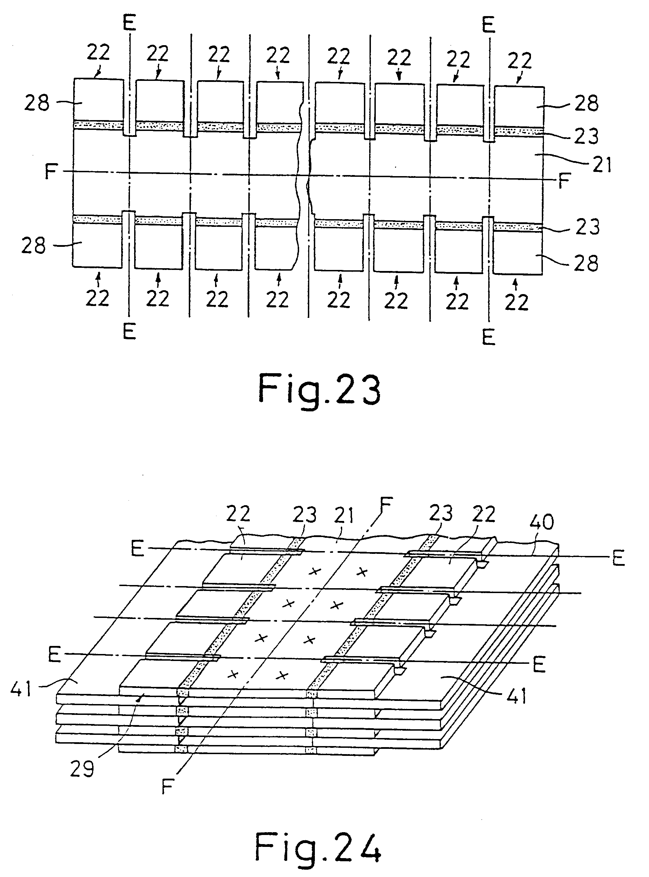

Instead of using as metal substrate a plate 21 as shown in Fig. 8 having spaced projections 22 along a single edge, a plate having projections along both edges (as in Fig. 1) could be used, as shown in Fig. 23.

In such case, an insulator band 23 is formed on the predetermined portions of both rows of the projections 22, and after the layers of aluminum oxide, pyrrole polymer graphite and silver paste are successively formed on the portions defined by the insulator band 23, the projections 22, 22 on both sides of the etched aluminum foils 21 are made to correspond to one another, as shown in Fig. 24, the thin copper plates 40 are interposed between silver paste layers formed on the portions 28 defined by the insulator bands 23 of the projections 22, and pressure is applied under high temperature to integrate these portions.

Next, the leading edges on both sides of the thin copper plates 40 are joined, e.g. by welding, and the etched aluminum foils 21 at the portions defined by the resist layers 23 (the portions opposite portions 28 and indicated by the "x" marks in Fig. 24) are also joined. The resulting laminate is then cut between the projections 22, 22 and along the central portion of the etched aluminum foil 21 (i.e. along the lines E-E and F-F in Figs. 23 and 24), thereby completing the fabrication of the capacitor element body 42 shown in Fig. 22.

The capacitor element body 42 can be employed to produce a capacitor having a four-terminal structure. Specifically, as shown in Fig. 17, there is prepared a molding frame 39 comprising frames 38, 38 arranged in parallel, and a lead frame 34 formed integrally with the frames 38, 38. Next, the capacitor element body 42 is arranged between the terminal sections 34, 34 of the molding frame 39. Next, the thin copper plate 40 of the capacitor element body 42 and one terminal section 34 are connected, as by being soldered together, and the etched aluminum foil 21 and one other terminal section 34 are joined (e.g. by spot, ultrasonic or seam welding). The entire capacitor element body 42 is then coated with a synthetic resin leaving the distal ends of the terminal sections 34 exposed. Finally, the distal ends of the lead frames 34 are severed from the frames 38, 38 and are bent downwards, to provide a miniature multi-layered solid electrolytic capacitor having a four-terminal structure, as shown in Fig. 18.

In place of the capacitor element body 42 having the illustrated four-terminal structure, it is possible to adopt a wire terminal-type structure of the kind shown in Figs. 4 and 6 by attaching wire terminals to the thin copper foil 40 of the capacitor element body 42 and to the etched aluminum foil 41; such capacitor can be clad in molded resin or the like if required.

If the capacitor is to have a chip-type structure, plate-shaped terminals are attached to the thin copper plate 40 and etched aluminum foil 21 of the capacitor element body 42, a cladding such as a molded resin is applied to the capacitor element body 42, and the terminals are bent along the bottom surface of the cladding from the outer side surfaces thereof, thereby providing a chip-type capacitor of the kind shown in Fig. 14.

The impedance characteristics of both the wire terminal-type and four-terminal type multi-layered solid electrolytic capacitor are almost the same as the characteristics indicated by the curves II and III of Fig. 19.

To fabricate the capacitor element in accordance with the foregoing embodiment, the capacitor element plates 29 are stacked with the thin copper plates 40 interposed therebetween, pressure is applied to integrally combine the thin copper plates 40 and etched aluminum foils 21, then the resulting laminate is cut at the predetermined portions to manufacture the capacitor element bodies 42 as discrete element laminates, and the terminals are attached to the copper plates 40 and etched aluminum foils 21 of the capacitor element body 42. However, the manufacturing sequence is not limited to the above. For example, after the capacitor element plates 29 are stacked with the copper plates 40 interposed therebetween and pressure is applied to integrate the plates, the resulting laminate can be cut at the predetermined portions to obtain the discrete element laminates, join the copper plates 40 of each laminate with one another, and join the etched aluminum foils 21 with one another, thereby manufacturing the capacitor element body 42.

Thus, the manufacturing process requires the following essential steps:
forming the insulator band 23 on the predetermined portion of the projection 22 of the etched aluminum foil 21 serving as the metal plate on which the dielectric oxidation layer is capable of being formed;
successively forming the layers of aluminum oxide layer, pyrrole polymer, graphite and silver paste on one portion 28 of the projection defined by the insulator band 23;
stacking a plurality of the metal plates in such a manner that the projections 22 correspond with one another, with the thin copper plates 40 being interposed between the silver paste layers on the portions 28 defined by the insulator bands 23;
applying pressure to and integating the projections 22 of the resulting laminate;
joining the copper plates of the integrated laminate and as well as the etched aluminum foils 21;
cutting the laminate at predetermined portions to obtain individual element laminates; and
attaching a first terminal to a portion of the copper plates 40 of the element laminate and a second terminal to a portion of the etched aluminum foils 21.

This method is suitable for mass production to give capacitors of uniform quality.

In the above-described embodiment, the etched aluminum foil 21 whose surface is roughened by etching is used as the metal plate serving as the base of the capacitor. However, it is also permissible to form an unetched aluminum foil as shown in Fig. 8 or 12, form the resist layer 23 on the predetermined portion of each projection 22, mask the foil leaving exposed the portion 28 defined by the insulator band 23, and etch the surface of the portion 28 to roughen the same.

When the plural capacitor element plates 29 of the above-described multi-layered solid electrolytic capacitor are stacked, the thin copper plates 40 are interposed between the portions 28, 28 defined by the insulator bands 23, thereby improving the current withstanding characteristic. In other words, a rise in the temperature of the capacitor can be suppressed when a high-frequency current is applied thereto.

In addition, the capacitance of the multi-layered solid electrolytic capacitor can be varied as described by changing the number of the capacitor element plates 29 that are stacked.

Further, the above-described solid electrolytic capacitor also is characterised by non-polarity, having a leakage current-voltage characteristic of the kind shown in Fig. 7, i.e. the capacitor does not exhibit polarity in a prescribed voltage range.

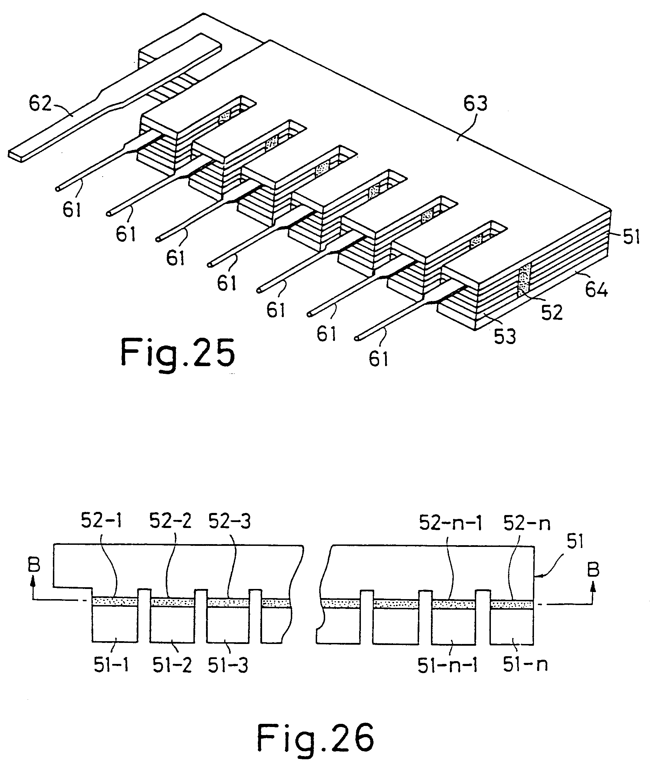

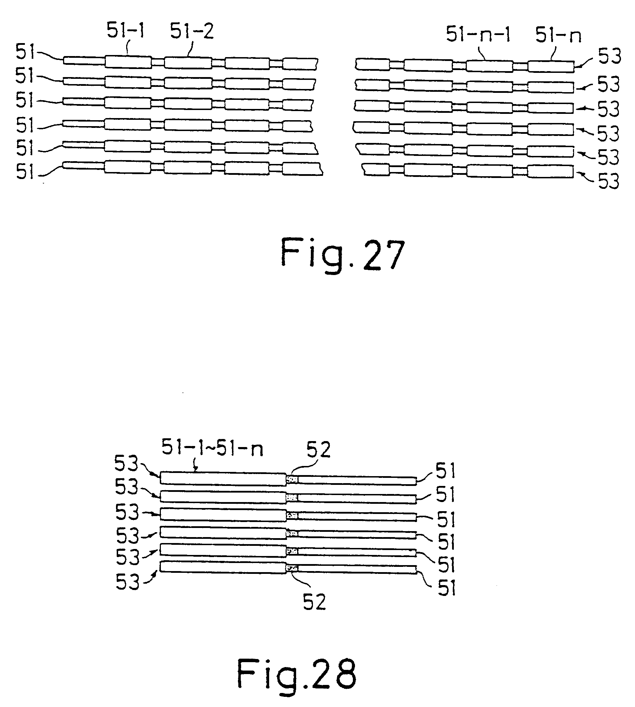

Figs. 25 to 28 show the structure of a multi-layered array-type solid electrolytic capacitor according to the invention; Fig. 25 is a perspective view, Fig. 26 a plan of a metal plate serving as substrate, Fig. 27 a front view of six stacked array-type solid electrolytic capacitor elements, and Fig. 28 a side view of the stack of Fig. 27.

In these Figures numerals 51 denotes an aluminum plate serving as a substrate to have a dielectric oxidation layer formed thereon. Plate 51 has its surface roughened by an etching treatment. A plurality of rectangular projections 51-1, 51-2,... 51-n are formed on one longitudinal side edge of the plate. Insulator bands 52-1, 52-3,... 52-n are formed at predetermined portions on the peripheral surfaces of the projections 51-1, 51-2,... 51-n, each of which is divided into a distal end and a base end by respective ones of said insulator bands.

As shown in Fig. 2 (which is an enlargement of the projection 51-1), an aluminum oxide layer, a polymer layer, a graphite layer and a silver paste layer, are formed successively, through the method described above, after masking on line B-B in Fig. 26, on the projections 51-1, 51-2,... 51-n at the distal end sides thereof defined by the insulator bands 51-1, 52-3,... 52-n.

Thus is obtained an array-type solid electrolytic capacitor element plate 53 having the structure as shown in Fig. 3 formed on the projections 51-1, 51-2,... 51-n of the aluminum plate 51. As shown in Figs. 27 and 28, a plurality (six in the illustration) of these array-type solid electrolytic capacitor element plates 53 are stacked, the projections 51-1, 51-2,... 51-n are subjected to pressure and the silver paste layers are hardened or partially dried, thereby integrating the projections 51-1, 51-2,... 51-n. The aluminum plates 51 are joined by being welded.

As shown in Fig. 25, the ends of terminals 61, 61,... are connected to respective ones of the silver paste layers formed on the projections 51-1, 51-2,... 51-n of the integrated laminate containing the stacked plurality of array-type solid electrolytic capacitor element plates 53. The terminals 61 are connected to the projections, e.g. by the application of heat and pressure. An insulator plate 63 is affixed to the laminate to cover the connected ends of the terminals 61 and this side of the laminate.

An insulator plate 64 is also affixed to the opposite side of the laminate. A terminal 62 is connected to the end portion of the aluminum plates 51, e.g. by welding.

If necessary, the resultant array-type solid electrolytic capacitor element can be clad in its entirety, with the exception of the distal ends of the terminals 61, 62, by a molded resin or the like, thereby completing the fabrication of a multi-layered array-type solid electrolytic capacitor.

The following table shows the results of a comparison between the present embodiment and a conventional ceramic array-type capacitor. These results show that while the array-type solid electrolytic capacitor of the present embodiment exhibits a slightly increased tan δ , capacitance is doubled with approximately the same leakage current.

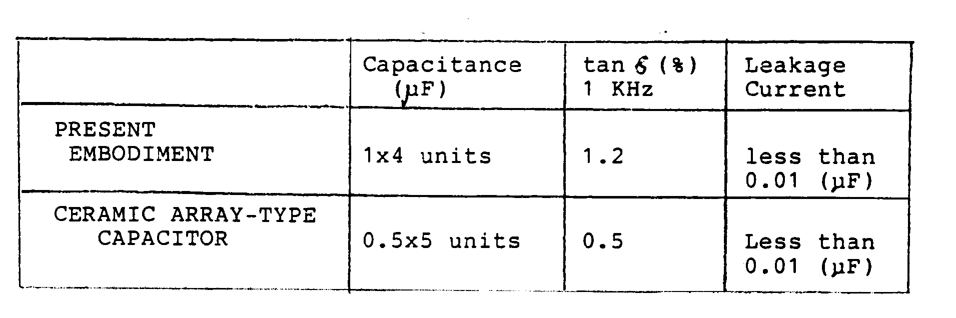

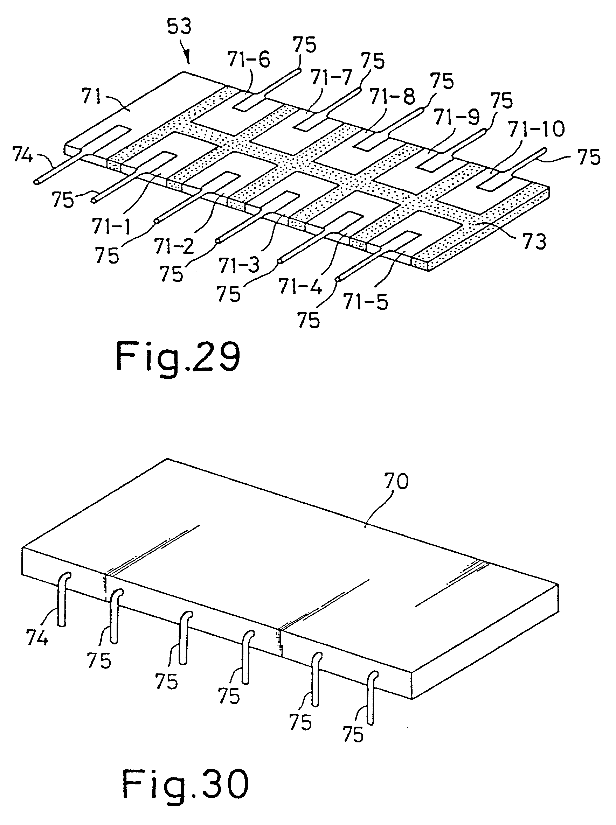

Fig. 29 illustrates the shape of another array-type solid electrolytic capacitor element plate 53 according to the invention. An aluminum plate 71 the surface of which is roughened by etching is used to bear a dielectric oxidation layer. An insulator band of repeated H-shape is formed on the top and bottom surfaces of the aluminum plate 71 so as to define a plurality of surfaces 71-1 to 71-10 at which the aluminum plate 71 is exposed, each of these surfaces being continuous on both faces of the aluminum plate 71.

Successive layers of aluminum oxide, polypyrrole, graphite and silver paste are formed, as described earlier, on each of the exposed surfaces 71-1 to 71-10 to make an array-type solid electrolytic capacitor element plate.

A terminal 75 is attached to the silver paste layer formed on each of the exposed surfaces 71-1 to 71-10 of the aluminum plate 71 constituting the array-type solid electrolytic capacitor element plate, and a terminal 74 is attached to a portion of the aluminum plate 71 not having the band 73.

A cladding e.g. of molded resin is formed on the resultant array-type solid electrolytic capacitor element, and the terminals 74 and 75, 75,... are bent downwards to complete the fabrication of a single-plate array-type solid electrolytic capacitor having the structure shown in Fig. 30.

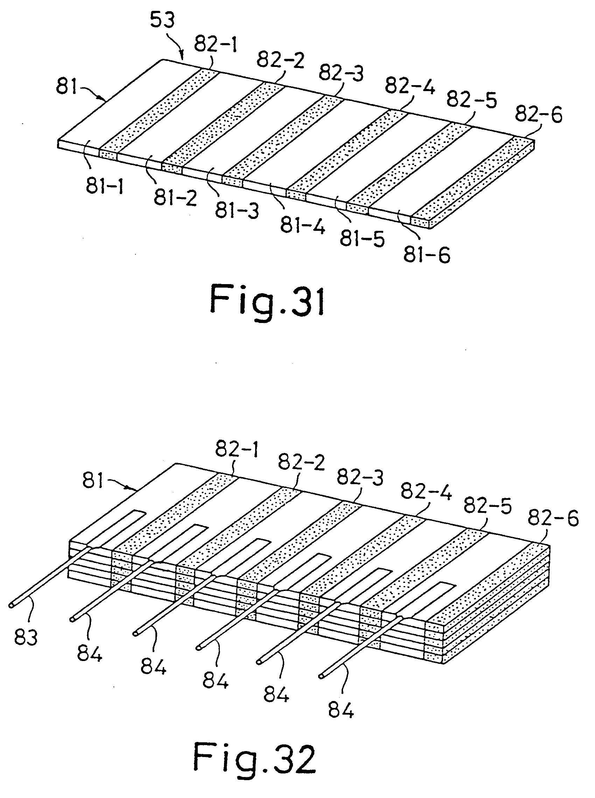

Fig. 31 is a view illustrating the shape of another array-type solid electrolytic capacitor element plate 53 according to the invention. As shown in Fig. 31, an aluminum plate 81 the surface of which is roughened by etching is used as a metal plate capable of having a dielectric oxidation layer formed thereon. Insulator bands 82-1 to 82-6 are formed on the entire periphery of the aluminum plate 81 at predetermined portions, these surfaces being continuous on both faces and these exposed surfaces are successively coated as described above, on each of the exposed surfaces 81-2 to 81-6, leaving the exposed surface 81-1 uncoated.

A plurality of the resultant array-type solid electrolytic capacitor element plates are stacked in such a manner that the portions corresponding to the exposed surfaces 81-1 to 81-6 are aligned with one another, and the exposed surfaces 81-1 to 81-6 are subjected to heating and pressure, thereby hardening the silver paste layers to integrate the plurality of array-type solid electrolytic capacitor element plates. The exposed surfaces 81-1 of the aluminum plates 81 are joined together, e.g. by welding.

A terminal 81 is attached to the exposed surfaces 81-1 of the resulting laminate,e.g. by welding, and terminals 84, 84, ... are attached to respective ones of the silver paste layers formed on the exposed surfaces 81-2 to 81-6 of the laminate, e.g. by soldering or hardening of the silver paste.

A cladding consisting of a molded resin or the like is formed on the resultant array-type solid electrolytic capacitor element, thereby completing the fabrication of a multi-layered array-type solid electrolytic capacitor (not shown).

Though an aluminum plate whose surface has been etched is described above as the metal plate serving as the capacitor base, it is permissible to use an unetched aluminum plate and to etch only those portions on which the aluminum oxide layer is to be formed, thereby roughening the surfaces of these portions.

By constructing the array-type solid electrolytic capacitor in the manner described above, the polymer layer of the heterocyclic compound serving as the electrolyte can be formed with ease by the electrochemical polymerization in the solvent including the heterocyclic compound. This makes it possible to readily manufacture array-type solid electrolytic capacitors having a large capacitance.

Since management of the manufacturing process is easy, array-type solid electrolytic capacitors of uniform quality can be obtained.

Since the polymer layer of a heterocyclic compound is used as an electrolyte, it is possible to obtain an array-type solid electrolytic capacitor having a low ESR and little leakage current.

If the multi-layered structure is adopted, array-type solid electrolytic capacitors having different capacitances can readily be manufactured by changing the number of layers.

The above-described array-type solid electrolytic capacitor is non-polar, i.e. it does not exhibit polarity in a prescribed voltage range. In connection with the multi-layered array-type solid electrolytic capacitor shown in Fig. 25, it has been experimentally confirmed that approximately the same leakage current - voltage characteristics are obtained even if terminal 62 is used as the anode or cathode and, conversely, the terminals 61 are used as cathodes or anodes.

## Claims

1. A solid electrolytic capacitor having at least one capacitor element comprising
a metal plate or foil (1; 21; 51; 71; 81) divided into a first and a second portion (4, 5) by a band (6; 23; 52; 73; 82) of an insulating material formed at the periphery of the metal plate or foil, whereby said first portion (5) is uncoated and said second portion (4) is roughened and coated in order with:
a) a dielectric oxidation layer (7),
b) a solid electrolyte layer (8), and
c) a single or composite electrically conductive layer (9, 10), having one or more first electrical terminal (12; 31; 35; 61; 75; 84) attached to said conductive layer and a second terminal (13; 32; 36; 62; 74; 83) attached to the plate or foil;
characterised in that said electrolyte layer (8) is composed of a polymer formed from a heterocyclic monomer and a supporting electrolyte.

2. A capacitor as claimed in Claim 1, wherein the polymer layer according to b) is formed from pyrrole, furan or thiophene.

3. A capacitor as claimed in Claim 1 or 2, wherein said metal of the plate or foil (1; 21; 51; 71; 81) is aluminum, tantalum, niobium or titanium.

4. A capacitor as claimed in Claim 1, 2 or 3, which comprises a capacitor element which comprises a single metal plate (71, 81) having a plurality of said coated portions each defined by a single insulating band (73) or bands (82), a plurality of said first terminals (75, 84) being each attached to the conductive layer on each of said coated portions and a single second terminal (74, 83) being attached to the uncoated portion of the plate (71, 81).

5. A capacitor as claimed in Claim 1, 2, 3 or 4, which comprises a multilayer capacitor element which is a stacked plurality (30) of said capacitor elements of the same configuration, the conductive layers according to c) of each adjacent plate being fixed together by pressure and the uncoated portions (5) thereof being joined together (x), and the capacitor has a single first electrical terminal contacting the conductive layers of all the capacitor elements and a single second electrical terminal contacting all the uncoated portions thereof.

6. A capacitor as claimed in Claim 5, comprising a plurality of capacitor elements (53) stacked in such a manner that the respective first and second portions (4,5) of each element correspond with each other and the uncoated portions of said metal plates (51) being joined together;
a first terminal (61) being attached to conductive layers (9) (10) between a pair of the plates in each stack of corresponding second portions and a single second terminal (62) being attached to said joined portions of the metal plates.

7. A capacitor as claimed in Claim 5 or 6, wherein a conductive plate (40), which can be of copper, is interposed between the conductive layers of adjacent plates (9,10), the conductive plates (40) being integrated to said conductive layers.

8. A capacitor as claimed in Claim 4, 5, 6 or 7, which is housed in an insulating cladding (33) apart from the terminals (31,32) which extend through the cladding.

9. A method of making a capacitor as the claimed in any of Claims 1 to 3, wherein the second portion (4) of the metal plate or foil is coated successively with the dielectric oxidation layer according to a), electrolyte layer according to b) and said electrically conductive layer according to c),
whereby an elongated metal plate or foil (51,21) is used which has a plurality of peripheral projections (2-1 ... 2-n; 3-1 ... 3-n; 22) formed along at least one edge thereof and an insulator band (6;23) is formed across each peripheral projection at the periphery thereof and the distal portion of each peripheral projection is roughened before or after said insulator bands are formed, and the coatings are formed on the distal portion of each peripheral projection, each peripheral projection is then severed from the body of the plate and terminals (12, 13; 31, 32) and attached to the conductive layer of each peripheral projection and to the uncoated first portion (5) thereof before or after each peripheral projection is severed.

10. A method as claimed in Claim 9, wherein the polymer layer was formed by electrolytic oxidation polymerisation in an electrolytic solution (L) containing the heterocyclic compound and said supporting electrolyte.

11. A method as claimed in Claim 9 or 10, wherein said supporting electrolyte is a boron compound obtained by chemically combining boric acid and any one of the following classes of organic compounds:
(1) an aliphatic or aromatic carboxylic acid, or salt thereof;
(2) an aliphatic or aromatic compound having two or more carbonyl radicals, or salt thereof;
(3) an aliphatic or aromatic compound having at least one hydroxyl radical and at least one carboxylic acid radical, or salt thereof; and
(4) an aliphatic or aromatic compound having at least one amine radical and at least one carboxylic acid radical, or salt thereof.

12. A method as claimed in Claim 9, 10 or 11, wherein an electrically insulating cladding (33) is applied around the element apart from the terminals extending therefrom.

## Patentansprüche

1. Trockenelektrolytkondensator mit wenigstens einem Kondensatorelement umfassend:
eine Metallplatte oder -folie (1, 21, 51, 71, 81), die geteilt wird in einen ersten und einen zweiten Abschnitt (4, 5) durch ein Band (6, 23, 52, 73, 82) aus isolierendem Material, welches an der Peripherie der Metallplatte oder -folie geformt ist, wobei der erste Abschnitt (5) unbeschichtet ist und der zweite Abschnitt (4) aufgerauht und nacheinander beschichtet ist mit:
a) einer dielektrischen Oxidationsschicht (7),
b) einer Trockenelektrolytschicht (8), und
c) einer einzelnen oder zusammengesetzten elektrisch leitenden Schicht (9, 10) mit einem oder mehreren ersten elektrischen Anschlüssen (12, 31, 35, 61, 75, 84), die an der leitfähigen Schicht befestigt sind und einem zweiten Anschluß (13, 32, 36, 62, 74, 83), der an der Platte oder Folie befestigt ist,
dadurch gekennzeichnet, daß die Elektrolytschicht (8) aus einem Polymer zusammengesetzt ist, welches gebildet wird aus einem heterozyklischen Monomer und einem Stützelektrolyten.

2. Kondensator nach Anspruch 1, dadurch gekennzeichnet, daß die Polymerschicht entsprechend dem Merkmal b) aus Pyrrol, Furan oder Thiophen gebildet ist.

3. Kondensator nach Anspruch 1 oder 2, dadurch gekennzeichnet, daß das Metall der Platte oder Folie (1, 21, 51, 71, 81) Aluminium, Tantal, Niob oder Titan ist.

4. Kondensator nach einem der Ansprüche 1 bis 3, der ein Kondensatorelement enthält, welches eine einzelne Metall-platte (71, 81) enthält, die eine Vielzahl von derartigen beschichteten Abschnitten aufweist, von denen jeder durch ein einzelnes Isolierband (73) oder -bänder (82) definiert ist, wobei eine Vielzahl der genannten ersten Anschlüsse (75, 84) an der leitenden Schicht jedes dieser beschichteten Abschnitte befestigt ist und ein einziger zweiter Anschluß (74, 83) am unbeschichteten Abschnitt der Platte (71, 81) befestigt ist.

5. Kondensator nach einem der Ansprüche 1 bis 4, der ein Vielschichtkondensatorelement enthält, welches eine gestapelte Vielzahl (30) solcher Kondensatorelemente der gleichen Konfiguration darstellt, wobei die leitenden Schichten entsprechend dem Merkmal c) jeder benachbarten Platte durch Druck aneinander befestigt sind und die unbeschichteten Abschnitte (5) davon miteinander verbunden sind (x) und der Kondensator einen ersten elektrischen Anschluß aufweist, der die leitenden Schichten aller Kondensatorelemente kontaktiert und einen zweiten elektrischen Anschluß, der die unbeschichteten Abschnitte davon kontaktiert.

6. Kondensator nach Anspruch 5, umfassend eine Vielzahl von Kondensatorelementen (53), die in einer derartigen Weise gestapelt sind, daß die entsprechenden ersten und zweiten Abschnitte (4, 5) jedes Elements mit jedem anderen korrespondieren und die unbeschichteten Abschnitte der Metallplatten (51) miteinander verbunden sind, wobei ein erster Anschluß (61) an den leitenden Schichten (9, 10) zwischen einem Paar der Platten in jedem Stapel korrespondierender zweiter Abschnitte befestigt ist und ein einzelner zweiter Anschluß (62) an den miteinander verbundenen Abschnitten der Metallplatten befestigt ist.

7. Kondensator nach Anspruch 5 oder 6, wobei eine leitende Platte (40), die aus Kupfer bestehen kann, zwischen den leitenden Schichten benachbarter Platten (9, 10) zwischengeschaltet ist und die leitenden Platten (40) mit den leitfähigen Schichten integriert sind.

8. Kondensator nach einem der Ansprüche 4 bis 7, der in einem isolierenden Gehäuse (33) untergebracht ist, mit Ausnahme der Anschlüsse (31, 32), die das Gehäuse durchsetzen.

9. Verfahren zur Herstellung eines Kondensators nach einem der Ansprüche 1 bis 3, wobei der zweite Abschnitt (4) der Metallplatte oder -folie nacheinander mit der dielektrischen Oxidationsschicht entsprechend a), der Elektrolytschicht entsprechend b) und der genannten elektrisch leitenden Schicht nach c) beschichtet wird,
wobei eine langgestreckte Metallplatte oder -folie (51, 21) benutzt wird, die eine Vielzahl von peripheren Vorsprüngen (2-1 ... 2-n; 3-1 ... 3-n; 22) aufweist, die längs wenigstens einer Kante der Metallplatte oder -folie angeformt sind und ein Isolatorband (6, 23) über jeden Randvorsprung an der Peripherie aufgebracht wird und der distale Abschnitt jedes Randvorsprungs aufgerauht wird, bevor oder nachdem das Isolatorband aufgebracht worden ist, und daß die Überzüge auf dem distalen Abschnitt jedes Randvorsprungs aufgebracht werden und daß jeder Randvorsprung dann vom Grundkörper der Platte abgetrennt wird und die Anschlüsse (12, 13; 31, 32) mit der leitenden Schicht jedes peripheren Vorsprungs und dem nichtüberzogenen ersten Abschnitt (5) verbunden werden, bevor oder nachdem jeder periphere Vorsprung abgetrennt wird.

10. Verfahren nach Anspruch 9, dadurch gekennzeichnet, daß die Polymerschicht durch eine elektrolytische Oxidationspolimerisation in einer Elektrolytlösung (L) gebildet wird, die die heterozyklische Verbindung und den genannten Unterstützungselektrolyten enthält.

11. Verfahren nach Anspruch 9 oder 10, wobei der Unterstützungselektrolyt eine Borverbindung ist, die durch chemische Kombination von Borsäure und einer der nachfolgend aufgeführten Klassen organischer Verbindungen erhalten wird:
(1) eine aliphatische oder aromatische Karbonsäure oder deren Salze,
(2) eine aliphatische oder aromatische Verbindung mit zwei oder mehr Karbonylradikalen, oder deren Salze,
(3) eine aliphatische oder aromatische Verbindung mit wenigstens einem Hydroxylradikal und wenigstens einem Karbonsäureradikal, oder deren Salzen, und
(4) eine aliphatische oder aromatische Verbindung mit wenigstens einem Aminradikal und wenigstens einem Karbonsäureradikal, oder deren Salzen.

12. Verfahren nach Anspruch 9, 10, oder 11, wobei ein elektrisches Isoliergehäuse (33) rund um das Element aufgebracht wird, mit Ausnahme der sich durch das Gehäuse erstreckenden Anschlüsse.

## Revendications

1. Condensateur électrolytique solide ayant au moins un élément de condensateur comprenant :
une plaque ou feuille métallique (1 ; 21 ; 51 ; 71 ; 81) divisée en une première portion (5) et une deuxième portion (4) par une bande (6 ; 23 ; 52 ; 73 ; 82) en un matériau isolant, formée au niveau de la périphérie de la plaque ou feuille métallique, la première portion (5) étant non revêtue et la deuxième portion (4) étant rendue rugueuse et revêtue, dans l'ordre, par :
a) une couche d'oxydation diélectrique (7),
b) une couche d'électrolyte solide (8), et
c) une couche électriquement conductrice, unique ou composite (9, 10), ayant une première borne électrique ou plusieurs (12 ; 31 ; 35 ; 61 ; 75 ; 84) fixée(s)sur la couche conductrice et une deuxième borne (13 ; 32 ; 36 ; 62 ; 74 ; 83) fixée sur la plaque ou feuille ;
caractérisée en ce que ladite couche d'électrolyte (8) est constituée par un polymère formé d'un monomère hétérocyclique et d'un électrolyte support.

2. Condensateur selon la revendication 1, dans lequel la couche polymère selon (b) est formée de pyrrole, de furanne ou de thiophène.

3. Condensateur selon la revendication 1 ou la revendication 2, dans lequel le métal de la plaque ou de la feuille (1 ; 21 ; 51 ; 71 ; 81) est l'aluminium, le tantale, le niobium ou le titane.

4. Condensateur selon l'une des revendications 1 à 3, qui comprend un élément de condensateur qui comprend une seule plaque métallique (71, 81) ayant une multiplicité de portions revêtues, chacune délimitée par une seule bande isolante (73) ou par plusieurs bandes isolantes (82), chacune d'une multiplicité de ces premières bornes (75, 84) étant attachée sur la couche conductrice déposée sur chacune des portions revêtues et une seule deuxième borne (74, 83) étant fixée sur la portion non revêtue de la plaque (71, 81).

5. Condensateur selon l'une des revendications 1 à 4, qui comprend un élément de condensateur multicouche, qui comprend une multiplicité (30) de ces éléments de condensateur de la même configuration empilés, les couches conductrices selon (c) de chaque plaque adjacente étant solidarisées les unes des autres par pression et les portions non revêtues (5) de ces éléments étant reliées ensemble (X), et dans lequel le condensateur a une seule première borne électrique contactant les couches conductrices de tous les éléments de condensateur et une seule deuxième borne électrique contactant toutes leurs portions non revêtues.

6. Condensateur selon la revendication 5, comprenant une multiplicité d'éléments de condensateur (53) empilés de telle manière que les premières portions (5) et les deuxièmes portions (4) de chaque élément se correspondent l'une à l'autre et que les portions non revêtues des plaques métalliques (51) sont reliées ensemble,
une première borne (61) étant fixée sur les couches conductrices (9, 10) entre une paire de plaques dans chaque empilage des deuxièmes portions correspondantes et une seule deuxième borne (62) étant fixée sur les portions solidarisées des plaques métalliques.

7. Condensateur selon la revendication 5 ou la revendication 6, dans lequel une plaque conductrice (40), qui peut être du cuivre, est interposée entre les couches conductrices de plaques adjacentes (9, 10), les plaques conductrices (40) étant solidarisées avec les couches conductrices.

8. Condensateur selon l'une des revendications 4 à 7, qui est logé dans un enrobage isolant (33) sauf en ce qui concerne les bornes (31, 32) qui s'étendent à travers l'enrobage.

9. Procédé pour fabriquer un condensateur tel que revendiqué dans l'une des revendications 1 à 3, dans lequel la deuxième portion (4) de la plaque ou feuille métallique est revêtue successivement par la couche d'oxydation diélectrique selon a), la couche d'électrolyte selon b) et la couche électriquement conductrice selon c),
procédé dans lequel on utilise une plaque ou feuille métallique allongée (51, 21) le long d'au moins un bord de laquelle sont formées plusieurs languettes périphériques (2-1, ... 2-n ; 3-1, ... 3-n ; 22) et dans lequel une bande isolante (6 ; 23) est formée en travers de chaque languette périphérique au niveau de sa périphérie et la portion distale de chaque languette périphérique est rendue rugueuse avant ou après formation de ces bandes isolantes, les revêtements sont formés sur la portion distale de chaque languette périphérique, chaque languette périphérique étant ensuite séparée du corps de la plaque, et des bornes (12, 13 ; 31, 32) sont fixées sur la couche conductrice de chaque languette périphérique et sur la première portion non revêtue (5) de celle-ci avant ou après la séparation de chaque languette périphérique.

10. Procédé selon la revendication 9, dans lequel la couche polymère est formée par polymérisation d'oxydation électrolytique dans une solution électrolytique (L) contenant le composé hétérocyclique et l'électrolyte support.

11. Procédé selon la revendication 9 ou la revendication 10, dans lequel l'électrolyte support est un composé de bore obtenu en combinant chimiquement l'acide borique et l'une quelconque des catégories suivantes de composés organiques :
(1) un acide carboxylique aliphatique ou aromatique ou un sel d'un tel acide ;
(2) un composé aliphatique ou aromatique ayant deux radicaux carbonyles ou davantage, ou un sel d'un tel composé ;
(3) un composé aliphatique ou aromatique ayant au moins un radical hydroxyle et au moins un radical acide carboxylique, ou un sel d'un tel composé ;
(4) un composé aliphatique ou aromatique ayant au moins un radical amine et au moins un radical acide carboxylique, ou un sel d'un tel composé.

12. Procédé selon l'une des revendications 9, 10 ou 11, dans lequel un enrobage électriquement isolant (33) est appliqué autour de l'élément, sauf en ce qui concerne les bornes s'en étendant.
